# DEMANDE DE BREVET EUROPEEN

(11) **EP 2 965 844 A1**
(43) Date de publication de la demande: **13.01.2016**
(21) Numéro de dépôt: 15174711.0
(22) Date de dépôt: 30.06.2015
(51) Int. Cl.: B23B 31/20

(54) **PROCÉDÉ DE FABRICATION D'UNE PINCE DE SERRAGE, ASSORTISSEMENT DE TÊTES DE PINCE DE SERRAGE, TÊTE DE PINCE DE SERRAGE, ET PINCE DE SERRAGE**

(30) Priorité: 08.07.2014 CH 10272014
(71) Demandeur: SER-TECK Bendit SA, 2800 Delemont (CH)
(72) Inventeur: Bendit, Jean-Luc, 2832 Rebeuvelier (CH)
(74) Mandataire: P&TS SA (AG, Ltd.)

(57) **Abrégé**

Procédé de fabrication d'une pince de serrage comprenant les étapes suivantes :
obtention d'un corps de pince de serrage (60) ;
obtention d'une tête de pince de serrage pré-usinée (30) ;
usinage de la tête dans une forme personnalisée,
assemblage du corps et de la tête au moyen d'éléments de fixation (44).

## Description

### Domaine technique

La présente invention concerne une pince de serrage pour machines-outils.

### Etat de la technique

Lors de l'usinage de pièces sur des tours, on utilise des pinces de serrage pour la fixation de la pièce à usiner, notamment lors d'usinage en contre-opération. Les pinces de serrage habituelles sont réalisées en seule pièce. Dans un atelier fabriquant différentes pièces, il est souvent nécessaire de prévoir un nombre important de pinces de serrage afin de saisir des pièces de taille ou de formes différentes. Des pièces complexes nécessitent en outre des pinces de serrage personnalisées qui sont difficiles à obtenir.

Afin de remédier à ces problèmes, il est connu de séparer la pince de serrage en un corps de pince et une tête de pince amovible. Par exemple le document FR2397907 divulgue une pince de serrage dont la tête de serrage et le tube de serrage sont susceptibles d'être séparés l'un de l'autre.

Comme autres exemples, les documents DE8807447 et US4971340 divulguent une pince de serrage comportant un corps principal et une tête de serrage qui peuvent être séparés permettant ainsi d'avoir un unique corps correspondant à tout un jeu de têtes de serrage pour l'usinage de diverses pièces. Les deux parties sont reliées par un dispositif d'accouplement en caoutchouc. L'inconvénient dans ce système est l'usure du caoutchouc. Dans un tel cas, l'ensemble de la tête de serrage doit être expédié au fabricant pour le remplacement du matériel en caoutchouc.

Par ailleurs lors d'usinages en contre opération, il est souvent nécessaire de reprendre la pièce par le côté déjà usiné sans l'abîmer. Ceci peut causer des problèmes de concentricité et peut également marquer les parties préalablement usinées.

Un autre problème est que quelque fois le besoin de tenir une pièce ayant une forme particulière nécessite de se procurer une nouvelle tête de serrage correspondant à cette forme particulière. Ceci induit des temps d'attente long et des coûts supplémentaires.

Afin de résoudre ce problème, on connaît dans l'art antérieur des pinces de serrage avec une tête personnalisable. A titre d'exemple, US4046390 concerne une pince de serrage comprenant une tête destinée à être fixée dans un collet. La tête de pince est pré-usinée et réalisée dans un matériau « mou ». Il est ainsi possible de l'usiner, par exemple de la tourner, pour la personnaliser. La personnalisation est effectuée après le montage de la tête sur le collet. Le montage de la tête par rapport au collet est cependant peu précis. Par ailleurs, cette solution est uniquement adaptée à des pinces tirées, c'est-à-dire des pinces dont les mâchoires se déplacent axialement à l'intérieur d'une douille fixe lors de leur fermeture. Dans ce type de pince, l'intérieur de la douille est donc occupé en sorte qu'il n'est plus possible de mettre un éjecteur ou un élément similaire dans la douille.

US2994539 concerne une pince pour pièces à usiner, comportant une tête de serrage avec plusieurs mâchoires qui peuvent être écartées pour saisir différentes largeurs de pièces à usiner. Les mâchoires sont remplaçables et réalisées dans un matériau mou afin de pouvoir les usiner après leur montage sur le corps. Toutefois, la tête de serrage est pratiquement noyée dans le corps de la pince, ce qui limite la plage d'ouverture des mâchoires. Le diamètre de la tête de serrage est constant sur toute sa longueur, à l'exception d'une portée de plus grand diamètre comportant des trous de fixation pour le montage de la tête sur le corps. Le diamètre du corps est donc relativement important, et la pince est donc encombrante par rapport à la taille de pièce qui peut être tenue. Le positionnement qui peut être obtenu par les vis ordinaires choisies est peu précis, et dépend du serrage. Il en résulte donc un positionnement imprécis de la tête par rapport au corps. A nouveau, cette solution est destinée à une pince tirée dont les mâchoires se déplacent axialement lors de leur ouverture.

US3411796 concerne une autre pince de serrage tirée avec une tête qui peut être réalisée dans différentes formes et différents matériaux. La tête de serrage comporte une portion élargie et une tige avec un diamètre réduit. Des fentes radiales séparent la portion élargie et la plus grande portion de la tige de manière à former différentes mâchoires. La tête est constituée d'un matériau mou ; toutefois un post-usinage n'est pas suggéré.

### Bref résumé de l'invention

Un but de la présente invention est de proposer une pince de serrage en deux pièces, multifonction, exempt des limitations des pinces de serrage connus.

Un autre but de l'invention est de proposer un procédé pour réaliser plus aisément des pinces de serrage personnalisées.

Selon l'invention, ces buts sont atteints notamment au moyen d'un procédé de fabrication d'une pince de serrage comprenant les étapes suivantes :
obtention d'un corps de pince de serrage ;
obtention d'une tête de pince de serrage pré-usinée, la dite tête comportant une première portion cylindrique et une deuxième portion cylindrique avec un diamètre plus large que celui de la première portion cylindrique ;
usinage de la deuxième portion de la tête dans une forme personnalisée,
engagement de ladite première portion cylindrique de la tête dans ledit corps;
positionnement et fixation du corps et de la tête au moyen de vis radiales engagées dans ledit corps et dans ladite première portion cylindrique.

Ce procédé a l'avantage de permettre à l'utilisateur d'usiner lui-même la tête de serrage pour l'adapter à ses besoins, en partant d'une ébauche (c'est-à-dire une tête de serrage pré-usinée) et réalisée dans un matériau facile à usiner.

La tête ainsi personnalisée peut être fixée et positionnée précisément dans le corps de pince au moyen des vis radiales. On évite ainsi tout risque de mauvais centrage de la tête dans le corps.

La portion de la tête engagée dans le corps est avantageusement plus réduite que la portion de la tête hors de la pince. Cela permet de réaliser un corps de pince compact.

La portion de la tête élargie permet de maintenir des pièces de grandes dimensions et de les serrer fortement, en réduisant le risque de déformation de cette portion.

L'utilisateur peut sélectionner une tête de pince de serrage dans un assortiment de têtes de pince de serrage comportant plusieurs têtes dans des matériaux différents. Il peut ainsi adapter le matériau de la tête à ses besoins d'usinage particuliers.

Les vis sont avantageusement des vis coniques. Le positionnement et le centrage de la tête par rapport au corps est donc assuré indépendamment du serrage de ces vis.

La tête de serrage comporte avantageusement trois secteurs angulaires de 120° formant trois mâchoires. Deux vis radiales sont avantageusement prévues dans chaque mâchoire. On assure ainsi un positionnement optimal de chaque mâchoire par rapport au corps.

La deuxième portion de la tête de serrage (c'est-à-dire la portion élargie qui sort du corps de la pince) est avantageusement plus longue que la première portion engagée dans le corps. On réduit ainsi les besoins en longueur du corps, et on assure un maintien précis de la pièce sur une longueur suffisante de la portion de tête hors du corps. On évite aussi un évasement excessif de la portion de tête hors du corps.

L'invention a aussi pour objet une tête de pince de serrage préusinée et destinée à être fixée de manière amovible à un corps de pince de serrage pour former une pince de serrage, comportant :
une première portion cylindrique avec un premier diamètre ;
une deuxième portion cylindrique avec un deuxième diamètre plus grand que le premier diamètre ;
lesdites premières et deuxièmes portions comprenant des fentes radiales et longitudinales séparant les deux portions en secteurs angulaires égaux;
les fentes définissant entre elles un logement central destiné à accueillir une pièce à usiner,
la première portion cylindrique comportant des trous radiaux taraudés destinés au maintien longitudinal de la tête de pince dans un corps de pince.

Cette tête de pince de serrage présente l'avantage de permettre un montage aisé de la pièce à usiner dans le logement entre les secteurs angulaires. Elle peut elle-même être insérée et positionnée précisément dans un corps de pince de serrage en insérant la partie de diamètre inférieur dans ce corps.

Le centrage de la tête dans le corps est assuré grâce aux vis radiales.

La tête de pince de serrage peut être réalisée dans un matériau facile à usiner, de préférence un matériau choisi parmi le laiton, l'ertacetal, l'aluminium, l'acier non trempé ou le bois.

La tête de pince peut comporter une ouverture sur son flanc, destinée à la maintenir à l'aide d'une goupille pour son usinage et sa personnalisation. Cette ouverture peut être inclinée avec un angle compris entre 20 et 60° par rapport à l'axe longitudinal de la tête de pince, afin de maintenir la tête de pince dans une direction oblique pendant sa personnalisation.

La présente invention a aussi pour objet une pince de serrage avec une tête de serrage comme décrite plus haut et un corps de pince de serrage destiné à recevoir cette tête de serrage , le corps comportant :
une portion proximale cylindrique ;
une portion distale évasée et formée de plusieurs secteurs angulaires égaux séparés l'un de l'autre par des fentes longitudinales;
au moins un trou de passage radial dans chaque dit secteur angulaire.

Un jeu de têtes en différents matériaux parmi les matériaux ci-dessus peut être prévu et associé avec un seul corps.

Le corps ne doit pas être personnalisé par l'utilisateur et peut être réalisé dans un matériau plus dur que la tête, par exemple en acier trempé.

Le positionnement longitudinal de la tête de serrage est obtenu par appui de l'épaulement entre lesdites premières et deuxièmes portions cylindriques contre l'extrémité distale dudit corps (60).

Cette solution présente l'avantage d'une grande précision. Elle permet d'éviter les marquages grâce aux différentes matières qui peuvent être choisies pour la tête de serrage.

Selon une caractéristique indépendante, l'invention concerne aussi un système comportant une pince de serrage telle que décrite et un porte-pince de serrage. Une portion du flanc externe du corps de la pince est avantageusement bombée vers l'extérieur, en sorte que le jeu entre le corps de pince et le porte-pince est variable. Ce jeu permet d'absorber les déformations du corps de pince en cas de serrage important de la pièce. Le serrage de ces éléments tend à redresser le bombage. La matière du corps de serrage peut ainsi se déplacer sans déformer la pince et le porte pince.

### Brève description des figures

Des exemples de mise en oeuvre de l'invention sont indiqués dans la description illustrée par les figures annexées dans lesquelles :
- La figure 1 illustre une tête de pince de serrage pré-usinée.
- La figure 2 illustre un corps de serrage.
- La figure 3 illustre la pince de serrage comprenant la tête de serrage de la figure 1 montée dans le corps de serrage de la figure 2.
- La figure 4 illustre une vue en perspective de la pince de serrage.

La figure 5 illustre une vue en coupe d'un système comportant une pince de serrage et un porte-pince.

### Exemple(s) de mode de réalisation de l'invention

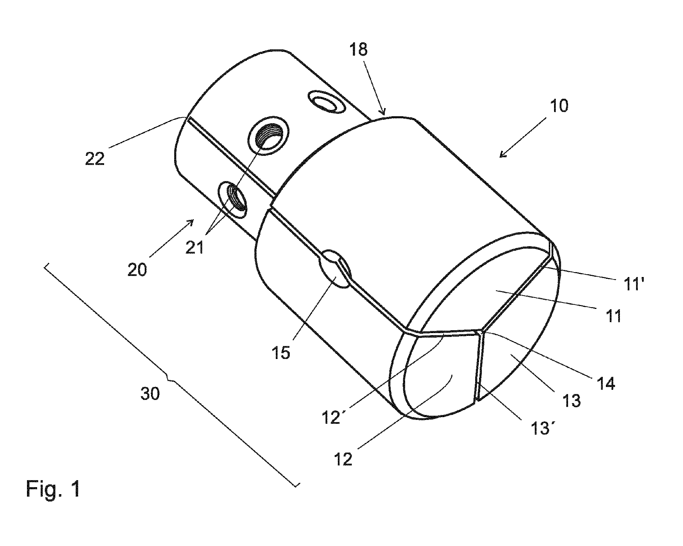

La figure 1 illustre une tête de serrage pré-usinée 30, selon un mode de réalisation, qui comporte deux portions cylindriques 10, 20 avec des diamètres différents. Un épaulement 18 est formé entre ces deux portions.

Cette tête peut être réalisée par exemple en laiton, en ertacetal, en aluminium, en acier ou en bois. L'acier est de préférence non trempé de manière à être usinable afin de permettre au client de personnaliser la tête et de l'adapter à ses besoins.

La tête de serrage comporte des fentes longitudinales 11', 12', 13' la traversant complètement dans la direction longitudinale partant de la première portion 20 de diamètre inférieur à la deuxième portion 10 de diamètre supérieur.

Ces fentes délimitent des segments angulaires égaux 11, 12, 13 disjoints ou éventuellement reliés entre eux par des ponts 22 visibles à l'extrémité de la partie inférieur 20 de la tête de serrage 30.

La surface de la portion cylindrique de diamètre inférieur 20 a un diamètre correspondant au diamètre du logement interne 45 d'un corps de serrage 30 décrit plus loin. Cette première portion est donc destinée au maintien de la tête 30 dans le corps de la pince.

Cette portion 20 de diamètre inférieur comporte des moyens de fixations 21 pour assembler la tête 30 au corps de serrage 60. Dans le mode de réalisation illustré, ces moyens de fixation sont constitués par des trous taraudés radiaux, par exemple six trous répartis régulièrement autour de la circonférence de la portion 20.

La portion 10 de diamètre supérieur est destinée au maintien de la pièce à usiner. Elle comporte également trois fentes 11', 12', 13' à 120° qui se rejoignent de manière à définir un logement 14 destiné à loger une pièce pendant son usinage. Ce logement 14 peut être usiné sous différentes formes. Dans un mode de réalisation la forme pourrait être à six pans ; huit pans, carrée, rectangulaire etc.

La longueur de la deuxième portion 10 est avantageusement plus longue que la longueur de la première portion 20. On assure ainsi un maintien de la pièce à usiner sur une longueur suffisante de la tête, tout en minimisant l'angle d'évasement formé lors du serrage d'une pièce.

La deuxième portion élargie 10 comporte préférablement une ouverture 15 dans son flanc pour maintenir la tête à l'aide d'une goupille pendant son usinage et sa personnalisation. Cette ouverture peut être oblique par rapport à l'axe longitudinal de la pince, par exemple entre 30 et 60°. Cela permet de tenir la tête dans une direction oblique et facilite l'usinage des mâchoires 11,12,13.

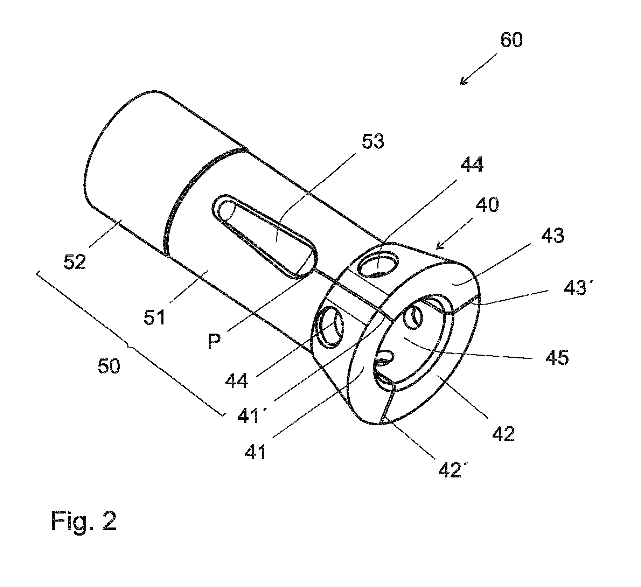

La figure 2 représente un corps de pince de serrage 60 comportant une portion sensiblement cylindrique 50 et une portion évasée 40 ayant une surface externe conique.

La partie sensiblement cylindrique 50 se compose de deux portions. La première portion 52 proximale destinée à être logée dans une broche d'un tour ou une décolleteuse par exemple. la portion intermédiaire 51 est directement reliée à la portion conique 40.

La portion intermédiaire 51 comporte des ouvertures 53 pour améliorer l'élasticité de la pince de serrage dans un tour.

La portion distale 40 est évasée et conique. Elle comporte des moyens de fixations 44, par exemple six trous traversant, correspondant aux trous taraudés 21 dans la tête de serrage. Il est ainsi possible de maintenir la tête de serrage au moyen de vis 46 traversant les trous 44 et engagées dans les trous taraudés 21. L'utilisation de plusieurs trous sur la circonférence permet de maintenir rigidement la tête de serrage dans le corps de pince, et de garantir le centrage de la tête. L'axe des trous 21 et 44 peut être non perpendiculaire à l'axe longitudinal de la pince de serrage; dans un mode de réalisation, cet axe est perpendiculaire à la surface extérieure conique 40. Il est ainsi possible d'exercer une traction vers l'arrière de la tête de serrage en serrant les vis. Des axes perpendiculaires à l'axe longitudinal de la pince de serrage peuvent aussi être employés.

La portion conique 40 est fendue par trois fentes longitudinales définissant trois secteurs angulaires 41, 42, 43 de 120° chacun agissant comme une pince pour serrer en eux, de manière élastique, la tête de serrage 30. Chaque secteurs angulaire 41, 42, 43 est lié à un secteur correspondant 11,12,13 de la tête par deux vis 46.

Les vis 46 sont avantageusement des vis coniques, qui permettent un centrage de la tête pratiquement indépendant de la force de serrage de ces vis.

Le positionnement longitudinal de la tête 30 est obtenu par l'appui de l'épaulement 18 contre l'extrémité du corps 60.

Le logement 45 du corps de serrage peut recevoir plusieurs types de tête de serrage.

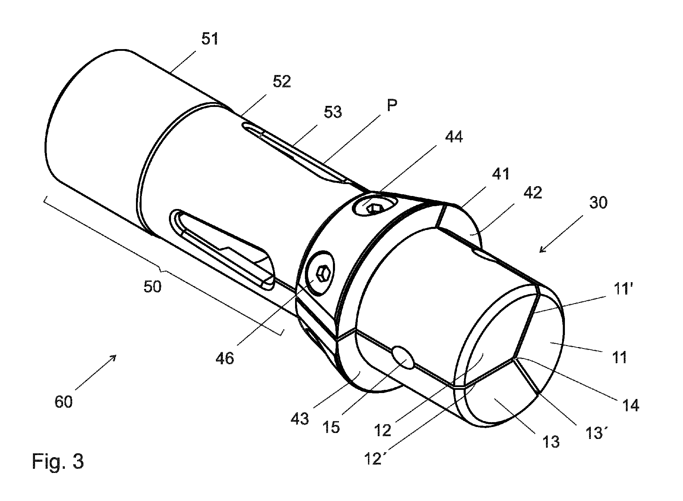

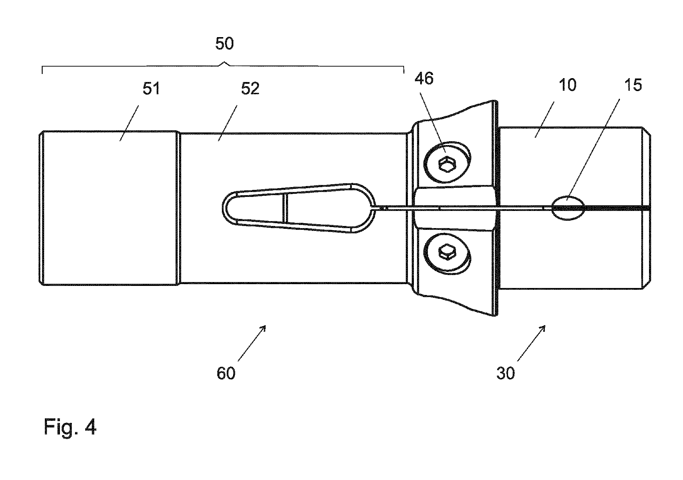

Les figures 3 et 4 montrent une pince de serrage montée. Une tête de serrage 30 est fixée dans un corps de serrage 60 et maintenue par les vis 46.

Un des intérêts de la présente invention est de permettre à l'utilisateur d'usiner aisément la tête de serrage 30 afin de la personnaliser et de l'adapter à différents types de pièces à usiner. Dans ce cas, un utilisateur obtient tout d'abord un corps de pince de serrage 60 et au moins une tête de serrage 30 pré-usinée, ou de préférence un assortiment de têtes de serrage de différentes formes et/ou de différents matériaux. Il choisit ensuite dans cet assortiment de têtes variées une tête de serrage appropriée, par exemple celle dont la forme correspond le mieux à ses besoins, et dont le matériau correspond aux exigences de la pièce à usiner. Par exemple, il choisira une tête de serrage en matériau synthétique tel que l'ertacetal ou même en bois pour maintenir une pièce en métal mou tel que l'or sans la rayer.

L'utilisateur peut ensuite personnaliser cette tête en l'usinant dans la forme personnalisée qui correspond à ses besoins. Il peut par exemple maintenir la tête de serrage par le trou 15, ou par la portion 20, pendant cet usinage.

Une fois que la tête de serrage a été usinée dans sa forme définitive par l'utilisateur final, celui-ci peut l'assembler avec le corps 60 au moyen des vis 46 de manière à constituer une pince de serrage personnalisée.

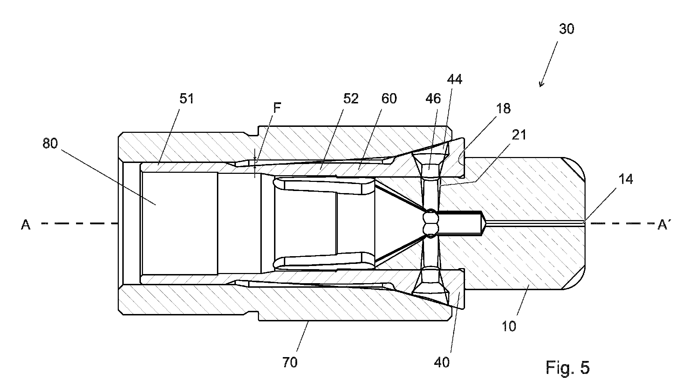

Les trois segments angulaires 41, 42, 43 du corps 60 ainsi que les trois segments 11,12,13 de la tête de pince de serrage 30 sont de préférence marqués, par exemple à l'aide de numéros ou de lettres, de manière à permettre à l'utilisateur de les distinguer les uns des autres. Un prototype peut ainsi être usiné en montant une tête de pince de serrage dans une position angulaire donnée par rapport au corps 60, puis de retrouver cette position donnée après démontage et remontage d'une tête dans un corps. La figure 5 illustre une vue en coupe de la pince de serrage 30, 60 montée dans un porte-pince 70. Le déplacement longitudinal du porte-pince autour du corps 60 provoque la fermeture ou l'ouverture des mâchoires, par appui contre la face externe de la portion évasée 40. La pince de serrage est donc de type poussée ; la tête de serrage 30 ne se déplace pas longitudinalement lors de l'ouverture ou fermeture des mâchoires. La pince s'ouvre et se ferme en déplaçant uniquement le porte pince 70. Ceci a l'avantage de maintenir l'origine en Z de la pièce à usiner indépendamment de la force de serrage.

Une ouverture 80 dans la pince permet de monter la pince sur l'axe de la broche.

Dans un mode de réalisation avantageux, le flanc externe du corps de serrage 60 comporte une portion 52 bombée vers l'extérieur de la pince. Le jeu entre cette portion bombée 52 et l'ouverture interne du porte-pince est donc variable, par exemple entre 0,5 millimètres au maximum aux deux extrémités de la portion bombée, et moins de 0,1 mm, par exemple 0mm, au centre de la portion bombée 52. Ce jeu permet d'absorber les déformations du corps de pince en cas de serrage important d'une pièce, en laissant un volume dans lequel le porte-pince 60 peut se déformer sans déformer le porte-pince 70. Cette caractéristique peut être utilisée en combinaison avec les autres caractéristiques de la pince décrite plus haut, ou indépendamment.

**Numéros de référence employés sur les figures**

| | |
|---|---|
| 10 | Deuxième portion cylindrique de la tête de serrage |
| 11 | Segment angulaire 1 |
| 12 | Segment angulaire 2 |
| 13 | Segment angulaire 3 |
| 11' | Fente |
| 12' | Fente 2 |
| 13' | Fente 3 |
| 14 | Espace réservé à la pièce à tenir |
| 15 | Ouverture pour usinage de la tête de pince serrage |
| 18 | Epaulement entre les premières et deuxièmes portions de la tête de serrage |
| 20 | Première portion cylindrique de la tête de serrage |
| 21 | Moyens de fixation de la tête de serrage |
| 22 | Pont |
| 30 | Tête de serrage |
| 40 | Portion avec une surface conique du corps de pince de serrage |
| 41 | Segment angulaire 1 |
| 42 | Segment angulaire 2 |
| 43 | Segment angulaire 3 |
| 41' | Fente1 |
| 42' | Fente 2 |
| 43' | Fente 3 |
| 44 | Trous de passage dans le corps de serrage |
| 45 | Logement pour la tête dans le corps de serrage |
| 46 | Vis de serrage |
| 50 | Portion cylindrique du corps de pince de serrage |
| 51 | Portion cylindrique reliée à la portion conique |
| 52 | Portion cylindrique fixée à un tour |
| 53 | Ouvertures d'amélioration de l'élasticité |
| P | Indication de la fin de la fente |
| 60 | Corps de pince de serrage |
| 70 | Porte pince |
| 80 | Ouverture dans la pince |
| A-A' | Axe de la pince |
| F | Jeu maximal |

## Revendications

1. Procédé de fabrication d'une pince de serrage comprenant les étapes suivantes :
obtention d'un corps de pince de serrage (60) ;
obtention d'une tête de pince de serrage pré-usinée (30) , la dite tête comportant une première portion cylindrique (20) et une deuxième portion cylindrique (10) avec un diamètre plus large que celui de la première portion cylindrique;
usinage de la deuxième portion cylindrique (10) de la tête dans une forme personnalisée,
engagement de ladite première portion cylindrique (20) de la tête dans ledit corps (60) ;
positionnement et fixation du corps et de la tête au moyen de vis (46) radiales engagées dans ledit corps (60) et dans ladite première portion cylindrique (20).

2. Procédé selon la revendication 1, comprenant une étape de sélection d'une dite tête de pince de serrage (30) dans un assortiment comportant plusieurs têtes dans des matériaux différents.

3. Procédé selon l'une des revendications 1 ou 2, lesdites vis (46) étant des vis coniques.

4. Procédé selon l'une des revendications 1 à 3, ladite tête comportant trois mâchoires (12,13,14), le positionnement de chaque mâchoire par rapport au corps étant obtenu au moyen de deux dites vis (46).

5. Assortiment de têtes de pince de serrage (30) dans différents matériaux et destinées à être utilisées dans le procédé de l'une des revendications 1 à 4.

6. Tête de pince de serrage (30) destinée à être fixée de manière amovible à un corps de pince de serrage (60) pour former une pince de serrage, comportant :
une première portion cylindrique (20) avec un premier diamètre ;
une deuxième portion cylindrique (10) avec un deuxième diamètre plus grand que le premier diamètre ;
lesdites premières et deuxièmes portions comprenant des fentes radiales et longitudinales séparant chacune de ces portions en secteurs angulaires égaux (11, 12, 13) ;
les fentes définissant entre elles un logement central (14) destiné à accueillir une pièce à usiner
la première portion cylindrique (20) comportant des trous radiaux taraudés (21) destinés au maintien longitudinal de la tête de pince (30) dans un corps de pince.

7. Tête de pince de serrage selon la revendication 6, comportant deux dits trous (21) par secteur angulaire.

8. Tête de pince selon l'une des revendications 6 à 7 dans laquelle les dits secteurs angulaires sont maintenus entre eux par des ponts (22) entre lesdites fentes.

9. Tête de pince de serrage selon l'une des revendications 6 à 8, dans laquelle la deuxième portion est plus longue que la première portion.

10. Téte de pince selon l'une des revendications 6 à 9 dans laquelle la deuxième portion (10) comporte une ouverture (15) sur son flanc, destinée à la maintenir à l'aide d'une goupille pour son usinage et sa personnalisation.

11. Tête de pince selon l'une des revendications 6 à 10, réalisée dans un matériau parmi le laiton, l'ertacetal, l'aluminium, l'acier non trempé ou le bois.

12. Tête de pince selon l'une des revendications 6 à 11, lesdits secteurs angulaires étant marqués pour les distinguer les uns des autres.

13. Pince de serrage comportant un corps de pince de serrage (60) et une tête de pince de serrage (30),
ledit corps de pince de serrage (60) comportant :
une portion proximale sensiblement cylindrique (52);
une portion distale (40) évasée et formée de plusieurs secteurs angulaires égaux (41, 42, 43) séparés l'un de l'autre par des fentes longitudinales (41', 42', 43') ;
au moins un trou de passage radial (44) dans chaque dit secteur angulaire,
ladite tête de pince de serrage (30) comportant
une première portion cylindrique (20) avec un premier diamètre ;
une deuxième portion cylindrique (10) avec un deuxième diamètre plus grand que le premier diamètre ;
lesdites premières et deuxièmes portions comprenant des fentes radiales et longitudinales séparant chacune de ces portions en secteurs angulaires égaux (11, 12, 13) ;
les fentes définissant entre elles un logement central (14) destiné à accueillir une pièce à usiner ;
la première portion cylindrique (20) comportant des trous radiaux taraudés (21) ;
ladite tête de pince de serrage (30) étant maintenue et positionnée dans ledit corps de pince de serrage (60) au moyen de vis (46) traversant lesdits trous de passage (44) et engagées dans lesdits trous radiaux taraudés (21).

14. Pince de serrage selon la revendication 13, lesdites vis (46) étant des vis coniques.

15. Pince de serrage selon l'une des revendications 13 ou 14, comportant deux dites vis (46) par secteur angulaire.

16. Pince de serrage selon l'une des revendications 13 à 15, ladite tête de serrage (30) comportant un épaulement (18) entre lesdites premières et deuxièmes portions cylindriques, le positionnement longitudinal de la tête de serrage (30) étant obtenu par appui dudit épaulement contre l'extrémité distale dudit corps (60).

17. Pince de serrage selon l'une des revendications 13 à 16, dans laquelle la deuxième portion (10) est plus longue que la première portion (20).

18. Pince de serrage selon l'une des revendications 13 à 17, comportant une douille porte-pince autour dudit corps (60), le déplacement axial de ladite douille contre ladite portion distale évasée (40) permettant le réglage de la force de serrage respectivement la libération de la pièce à usiner.

19. Pince selon l'une des revendications 13 à 18, ladite portion proximale (51) étant bombée vers l'extérieur de la pince.

20. Corps de pince selon la revendication 19, dans laquelle le jeu maximal (F) entre la portion proximale bombée et la douille porte-pince est de 5 dixièmes de millimètres, et le jeu minimal nul ou inférieur à 1 dixième de millimètre.
